(19) Europäisches Patentamt
European Patent Office
Office européen des brevets

(11) **EP 1 722 470 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
*H02P 27/12* *(2006.01)*    *H02P 21/14* *(2006.01)*
*H02P 21/00* *(2006.01)*    *H02M 7/5387* *(2007.01)*

(21) Anmeldenummer: **06009591.6**

(22) Anmeldetag: **10.05.2006**

(54) **Verfahren und Schaltungsanordnung zur näherungsweisen Einstellung eines Spannungsraumzeigers**

Method and circuit configuration for approximate adjustment of a voltage space vector

Procédé et dispositif de commutation destinés au réglage approximatif d'une aiguille d'espace contrainte

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.05.2005 AT 8232005**

(43) Veröffentlichungstag der Anmeldung:
**15.11.2006 Patentblatt 2006/46**

(73) Patentinhaber: **Schrödl, Manfred**
**7223 Sieggraben (AT)**

(72) Erfinder: **Kalteis, Gerald**
**3270 Scheibbs (AT)**

(74) Vertreter: **Krause, Peter**
**Sagerbachgasse 7**
**2500 Baden (AT)**

(56) Entgegenhaltungen:
**DE-A1- 4 034 520          US-A1- 2004 195 995**

## Beschreibung

Die Erfindung betrifft ein Verfahren zur näherungsweisen Einstellung des Spannungsraumzeigers bei einer über einen Spannungszwischenkreisumrichter gespeisten Drehfeldmaschine. Ferner betrifft die Erfindung auch eine Schaltungsanordnung zur Durchführung des Verfahrens.

Moderne Drehstrommotoren werden häufig in Kombination mit einem vorzugsweise dreiphasigen Spannungszwischenkreisumrichter betrieben. Dabei wird bei vielen Regelverfahren der Ist-Strom im Motor benötigt. Nach dem Stand der Technik ermittelt man die Phasenströme in den Motorzuleitungen zwischen Umrichter-Halbbrückenausgang und Motorklemme. Dabei werden häufig teure und im Innenaufbau komplizierte Messeinrichtungen verwendet. Diese Messeinrichtungen basieren häufig auf der Erzeugung eines magnetischen Feldes in einem magnetisch leitfähigen Kernmaterial in der Messeinrichtung, welche dann mit magnetfeldempfindlichen Sensoren, wie beispielsweise Halleele-mente, Feldplatten oder dgl., entweder absolut oder kompensierend weiterverarbeitet werden. Ziel dieser Weiterverarbeitung ist die Zurverfügungstellung eines dem zu messenden Strom proportionalen Strom- oder Spannungssignals am Ausgang des Messelementes.

Der Nachteil dieser Strommessmethode sind hohe Kosten durch komplexe Messtechnik und eine begrenzte Genauigkeit und Bandbreite durch die verwendeten Übertragungselemente, wie beispielsweise Verstärker, Magnetfeldsensoren od. dgl.

Aus der US 5 309 349 A ist ein Verfahren der Strommessung bekannt, das auf Basis der Zwischenkreisstrommessung beruht. Dabei wird der Umrichter als intelligenter Umschalter zwischen Phasenströmen genützt, der fallweise die verschiedenen Phasenströme in den Zwischenkreis abbildet. Der Vorteil dieses Verfahrens zur Strommessung ist, dass dabei mit einem einzigen Messelement die Phasenströme rekonstruiert werden können. Der Nachteil der bisher bekannten auf Messung des Zwischenkreisstromes basierenden Strommessverfahren ist jedoch, dass häufig die Zeit, in der Phasenstrommessungen möglich sind, zu kurz für eine gute Erfassung mittels Strommessung ist. Der Grund liegt einerseits darin, dass bei hochfrequent getakteten Umrichtern die Zeiten zwischen dem Wechsel des Umrichterstatus sehr kurz sind und dass weiters der vom Umrichter häufig ausgegebene Zustand "alle Umrichterhalbbrücken auf gleichem Potential", der auch als "Klemmenkurzschluss" bezeichnet wird, nicht geeignet ist, einen Phasenstrom im Zwischenkreis zu messen, da der Phasenstrom den Zwischenkreis in diesem Zustand nicht passiert.

Es gibt Lösungsvorschläge, die das Problem dieser kurzen aktiven Messzeiten durch Erzwingen einer Mindesteinschaltdauer der Umrichterschalterstellung umgehen. Ein Lösungsvorschlag ist in M.Platnic, "Current estimator for a three phase inverter". U.S. Appl. No. 08/903,110, 1997 beschrieben. Ein weiterer wird in Texas Instruments Europe: "Three phase current measurements using a single line resistor on the TMS320F240", Literature Number BPRA077, Mai 1998 aufgezeigt. Der Nachteil dieser Methode ist jedoch, dass die Stromregelung durch die zwangsweise verlängerten Messzeiten gestört wird und dies in den folgenden Zyklen wieder kompensiert werden muss. Ein weiterer Nachteil der Methode ist, dass bei kleinen Drehzahlen sehr wenig Spannungszeitfläche benötigt wird und der anteilsmäßig lange Zeitabschnitt "Umrichterkurzschluss" für die Strommessung im Zwischenkreis verloren ist.

Weiters ist aus der US 2004/0195995 A1 ein Pulsweitenmodulations-Verfahren bekannt, welches auf sechs Sektoren in der Spannungsraumzeigerebene führt und beim Übergang zwischen den sich im Ursprung schneidenden Sektoren zu Problemen der Spannungseinstellung führt.

Ferner ist noch in der DE 40 34 520 A1 eine Direktauswahl von Spannungsraumzeigern aufgrund von aktuellen Soll-Ist-Abweichungen beschrieben. Dies ist eine direkte Auswahl, welche nur fixe Zeiger produzieren kann.

Aufgabe der Erfindung ist es daher, ein Verfahren und eine Schaltungsanordnung zu schaffen, das bzw. die einerseits die oben erwähnten Nachteile vermeidet und das bzw. die anderseits eine schnellere Stromregelung ermöglicht und einen wirtschaftlich vertretbaren Aufwand erfordert.

Die Aufgabe wird durch die Erfindung gelöst.

Das erfindungsgemäße Verfahren ist dadurch gekennzeichnet, dass zur Einstellung des Spannungsraumzeigers, zumindest fallweise, ein Aktiv-Pulsweitenmodulations-Zyklus mit der Periodendauer als Pulsmuster aus mindestens zwei, vorzugsweise drei, Umrichter-Schalterstellungen an die Drehfeldmaschine angelegt wird, wobei der Aktiv-Pulsweitenmodulations-Zyklus eine Kombination aus positiver oder negativer Zeiger in Richtung u und/oder positiver oder negativer Zeiger in Richtung v und/oder positiver oder negativer Zeiger in Richtung w ist und die entsprechenden Einschaltdauern nach der Formel:

$$\underline{u}.T = su.\underline{u}_u .T_u + sv.\underline{u}_v .T_v + sw.\underline{u}_w .T_w$$

mit den Nebenbedingungen
$T = T_u + T_v + T_w$, wobei die Einschaltdauern $T_u$, $T_v$, $T_w$ größer oder gleich Null sind und su, sv, sw die Werte +1, 0 oder -1 annehmen können, bestimmt werden.

Mit der Erfindung ist es erstmals möglich, die Probleme der sehr kurzen Einschaltdauern aktiver Pulsweitenmodulations-Zustände, bei betragsmäßig kleinen Spannungen im Hinblick auf die Rekonstruierbarkeit des Stromes über den Zwischenkreis zu vermeiden. Die Folge ist eine bessere Stromregelung der Drehfeldmaschine. Gemäß der Erfindung wird der Umrichter zumindest fallweise ausschließlich durch Verwenden der aktiven Umrichter-Schaltzustände betrieben, der Zustand "Klemmenkurzschluss" wird nicht verwendet. Dieser Zyklus zur Erzeugung eines über den Zyklus gemittelten Spannungsraumzeigers wird im Folgenden als "Aktiv-Pulsweitenmodulations-Zyklus" (kurz Aktiv-PWM- Zyklus) bezeichnet.

Der Zustand "Klemmenkurzschluss bedeutet, dass kein Energieaustausch zwischen Maschine und Spannungszwischenkreis stattfindet. Unter aktiv wird der Zustand verstanden, bei dem zwischen der Maschine und dem Spannungszwischenkreis sehr wohl ein Energieaustausch stattfinden kann.

Es werden also im Allgemeinen nicht die vom Umrichter direkt einstellbaren Raumzeiger von überlagerten Stromreglern vorgegeben, sondern beliebige Zeiger in der Raumzeigerebene. Die Einschaltdauern der zum Pulsmuster gehörigen Umrichterzustände werden derart gestaltet, dass der über das Pulsmuster gemittelte Spannungsraumzeiger gleich dem einzustellenden Sollspannungsraumzeiger entspricht. Dies gilt natürlich ohne Beschränkung der Allgemeinheit, wobei in der Folge - zum besseren Verständnis - von dreiphasigen Umrichtern ausgegangen wird.

Der gravierende Vorteil der Erfindung liegt darin, dass die Rekonstruktion des Maschinenstromes über eine Zwischenkreisstrommessung sehr präzise wird, weil alle drei Strangströme bei jedem Pulsmuster im Zwischenkreis abgebildet werden, während bei dem Stand der Technik entsprechenden Pulsmustern Zeitabschnitte ohne Strom im Zwischenkreis auftreten.

Nach einem besonderen Merkmal der Erfindung wird zur Bestimmung der aktuellen Maschinenströme die Strommessung im Zwischenkreis durch mindestens einmaliges Abtasten des Zwischenkreisstromes während der auftretenden aktiven Umrichter-Schaltzustände durchgeführt. Dies hat den großen Vorteil, dass nur ein billiger Stromsensor im Zwischenkreis vorgesehen wird. Im Gegensatz dazu werden im Stand der Technik aufwändige Stromsensoren in mindestens zwei Maschinenzuleitungen ausgeführt.

Gemäß einer weiteren Ausgestaltung der Erfindung werden in Abhängigkeit von mindestens einem der Zustände "Drehzahl", "Drehwinkel" und "vorhergehender PWM-Zyklus" der Drehstrommaschine die an der Pulsmusterbildung beteiligten Spannungsraumzeiger bzw. Umrichter-Schalterstellungen geändert. Diese Ausgestaltung hat den Vorteil, dass dadurch die gesamte theoretisch mögliche vom Umrichter erzeugbare Spannungsraumzeigerfläche abgedeckt wird oder hohe Symmetrien, etwa durch ständiges Wechseln zwischen zwei den gleichen mittleren Spannungsraumzeiger erzeugenden Pulsmustern, eingestellt werden.

Nach einer besonderen Ausgestaltung der Erfindung wird in Abhängigkeit von mindestens einem der Zustände "Drehzahl", "Drehwinkel" und "vorhergehender PWM-Zyklus" der Drehstrommaschine das Pulsmuster durch ein Pulsmuster, das auch den Umrichterzustand "Kurzschluss" enthält, abgelöst. Dies bietet den Vorteil, dass beispielsweise bei höheren Drehzahlen ein dem Stand der Technik entsprechendes Pulsmuster verwendet werden kann, das beispielsweise im Hinblick auf den Stromoberschwingungsgehalt optimiert werden kann.

Gemäß einem weiteren Merkmal der Erfindung wird der Stromanstieg des in den Zwischenkreis abgebildeten Strangstroms durch mindestens zweimaliges Abtasten des Stromes während einer anliegenden Umrichter-Schalterstellung erfasst. Ebenso ist es ein besonderes Merkmal der Erfindung, dass höhere Ableitungen des in den Zwischenkreis abgebildeten Strangstroms durch mindestens dreimaliges Abtasten des Stromes während einer anliegenden Umrichter-Schalterstellung erfasst werden. Genauso ist es ein wichtiges Merkmal der Erfindung, dass durch mehrmaliges Abtasten des Stroms mindestens eine der physikalischen Größen "Drehwinkel", "Flusswinkel", "Drehzahl", "Zwischenkreisspannung", "Stranginduktivität", "induzierte Spannung" bestimmt werden.

Dieses mehrmalige Abtasten bietet den Vorteil, dass neben der Strominformation weitere Parameter und/oder Zustandsgrößen der Maschine, wie Induktivität, Zwischenkreisspannung, Drehwinkel etc, erfasst werden. Etwa durch Anwendung von dem zum Stand der Stand der Technik zählenden INFORM-Verfahren gemäß der AT 406722 oder dgl.

Es ist aber auch Aufgabe der Erfindung eine Schaltungsanordnung zur Durchführung des obigen erfindungsgemäßen Verfahrens zu schaffen, die vor allem einen wirtschaftlich vertretbaren Aufwand erfordert.

Die erfindungsgemäße Schaltungsanordnung ist dadurch gekennzeichnet, dass eine über einen Spannungszwischenkreisumrichter gespeiste Drehstrommaschine vorgesehen ist, dass im Zwischenkreis ein Messglied zur Erfassung des Zwischenkreisstromes angeordnet ist und das Messglied mit einer in einer Mess- und Steuereinheit vorgesehenen Motorstrom-Rekonstruktionsschaltung verbunden ist, dass in der Mess- und Steuereinheit weiters eine Regelungsschaltung, die die Umrichter-Schalterstellung vorgibt, vorgesehen ist, die einerseits mit der Motorstrom-Rekonstruktionsschaltung und anderseits mit dem Wechselrichter verbunden ist und dass die Sollwertvorgabe für einen Maschinenzustand über einen Eingang der Regelungsschaltung erfolgt. Die erfindungsgemäße Schaltungsanordnung bringt vor allem den gravierenden Vorteil mit sich, dass keine teuren und komplizierten Messeinrichtungen notwendig sind. Dadurch ist auch die Funktionstüchtigkeit der Regelung gewährleistet.

Die Erfindung wird an Hand von Ausführungsbeispielen, die in der Zeichnung dargestellt sind, näher erläutert.

Fig. 1 zeigt eine Schaltungsanordnung,

Fig. 2 ein Diagramm von möglichen Spannungsraumzeigern eines dreiphasigen Umrichters,

Fig. 3 und 4 Bereiche der Spannungsraumzeigerebene unter ausschließlicher Verwendung von aktiven Schaltzuständen

Fig. 5 ein Ausführungsbeispiel zur Spannungsraumzeigerbildung mit zentralem aktiv-PWM-Zyklus und

Fig. 6 ein Ausführungsbeispiel zur Spannungsraumzeigerbildung mit ausschließlichen aktiv-PWM-Zyklen.

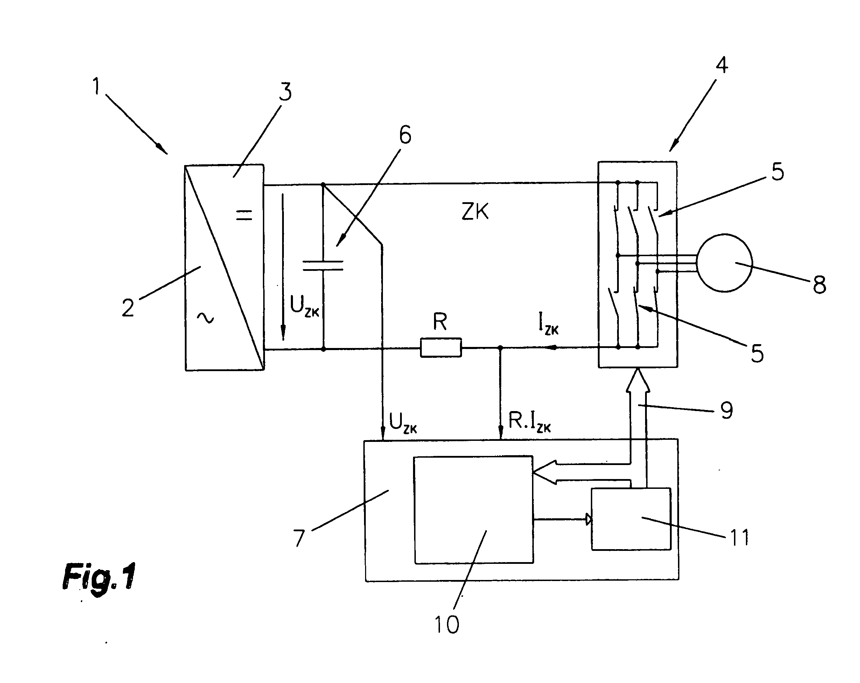

Die Fig. 1 zeigt in einem Blockschaltbild die Regelung einer Drehstrommaschine. Gemäß der Fig. 1 wird ein Umrichter 1 an seinem optionellen Wechselspannungseingang 2 von einem Ein- oder Dreiphasen - Wechselspannungsnetz gespeist. Die Gleichspannungsseite 3 ist über den Zwischenkreis zk mit dem Wechselrichter 4, der die Halbleiterventile 5 aufweist, verbunden. Über einen Kondensator 6 wird die Zwischenkreisspannung Uzk gestützt und der Mess- und Steuereinheit 7 zugeführt. Ferner wird auch über den Widerstand R der Zwischenkreisstrom Izk der Mess- und Steuereinheit 7 zur Verfügung gestellt. Der aktuelle Schaltzustand des Umrichters 1 wird von der Mess- und Steuereinheit 7 vorgegeben. An der Brückenschaltung der Halbleiterventile 5 ist die zu regelnde Drehstrommaschine 8 angeschlossen. Über die von der Mess- und Steuereinheit 7 errechneten Ansteuersignale 9 wird der Wechselrichter 4 angesteuert.

Im Zwischenkreis ist ein Messglied, beispielsweise der Widerstand R, zur Erfassung des Zwischenkreisstromes angeordnet und das Messglied mit einer in einer Mess- und Steuereinheit vorgesehenen Motorstrom-Rekonstruktionsschaltung 10 verbunden. In der Mess- und Steuereinheit 7 ist weiters eine Regelungsschaltung 11, die die Umrichter-Schalterstellung vorgibt, vorgesehen, die einerseits mit der Motorstrom-Rekonstruktionsschaltung 10 und anderseits mit dem Wechselrichter 4 verbunden ist. Die Sollwertvorgabe für einen Maschinenzustand erfolgt über die Regelungsschaltung 11.

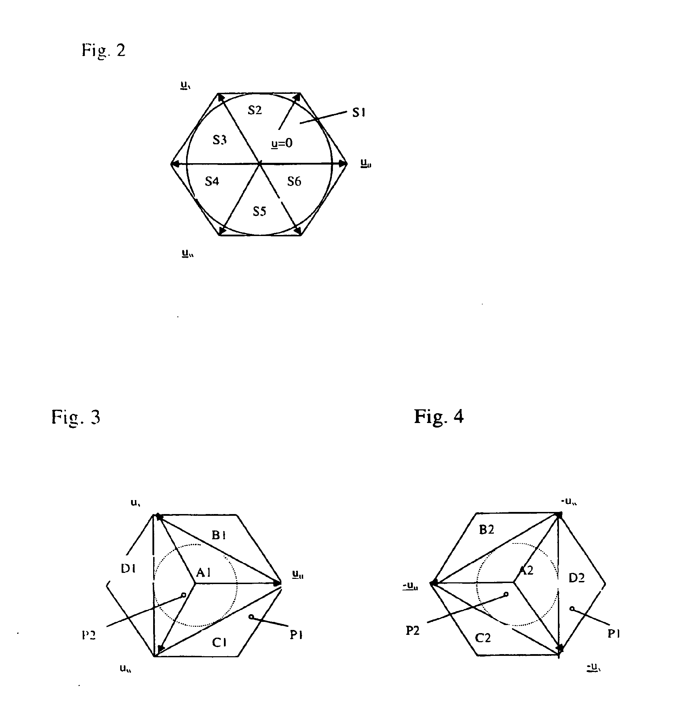

Gemäß der Fig. 2 sind die möglichen Spannungsraumzeiger eines dreiphasigen Umrichters dargestellt.

Aus der Fig. 2 folgt, dass im Allgemeinen nicht die vom Umrichter direkt einstellbaren Raumzeiger von überlagerten Stromreglern vorgegeben werden, sondern beliebige Zeiger in der Raumzeigerebene. Das erfindungsgemäße Verfahren verwendet zur Erzeugung eines aktiv-PWM-Zyklus die Kombination "positiver oder negativer Zeiger in Richtung u", "positiver oder negativer Zeiger in Richtung v", "positiver oder negativer Zeiger in Richtung w".

Der Innkreis des Sechsecks entspricht dem größten darstellbaren "quasibetragskontinuierlichen" Spannungsraumzeiger.

Im Gegensatz dazu würde bei einem Verfahren gemäß dem Stand der Technik häufig die Kombination "linker Nachbar", "rechter Nachbar" und "Klemmenkurzschluss" verwendet werden, wobei dies auf die 6 Sektoren S1, .. S6 gemäß Fig. 2 führt.

Das vorliegende Verfahren findet zuerst eine geeignete Kombination aktiver Zeiger und bestimmt sodann die entsprechenden, insbesondere relativen, Einschaltdauern der geeigneten Zeiger. Dabei wird der vorgegebene Spannungsraumzeiger ($\underline{u}$), multipliziert mit der Periodendauer (T), gleichgesetzt den aktiven Zeigern ($\underline{U}_u$, $\underline{U}_v$, $\underline{U}_w$) multipliziert mit deren zeitlicher Einschaltdauer ($T_u$, $T_v$, $T_w$) und den Richtungsvariablen su, sv, sw:

$$\underline{u}.T = su.\underline{u}_u.T_u + sv.\underline{u}_v.T_v + sw.\underline{u}_w.T_w$$

mit der Nebenbedingung

$$T = T_u + T_v + T_w$$

Aus Kausalitätsgründen müssen alle Teilzeiten $T_u$, $T_v$, $T_w$ größer (oder gleich) Null sein. Die Richtungsvariablen su, sv und sw können nur die Werte +1, 0 oder - 1 annehmen. Null wird nur in Sondersituationen angenommen, wenn der darzustellende Spannungsraumzeiger zufällig durch eine Kombination von ausschließlich zwei aktiven Zeigern eingestellt wird.

Die "natürlichen" Raumzeiger des Umrichters sind dabei

$$\underline{U}_u = 2/3.u_{zk}.exp(j0°) \qquad \text{Umrichterzustand "1 / 0 / 0"}$$
$$\underline{U}_u = 2/3.u_{zk}.exp(j120°) \qquad \text{Umrichterzustand "0 /1 / 0"}$$
$$\underline{U}_w = 2/3.u_{zk}.exp(j240°) \qquad \text{Umrichterzustand "0 / 0 / 1"}$$

Dabei bedeutet die Spannung $U_{zk}$ die Zwischenkreisspannung.

Die möglichen Kombinationen von möglichen Werten für su, sv und sw liefern gemeinsam mit den Kausalitätsbedingungen für die Teilzeiten vier Sektoren in der Raumzeigerebene (Fig. 3):

Su = sv = sw = 1 .. inneres Dreieck A1
Su = sv = 1, sw = -1 .. rechtes oberes Dreieck B1
Su = 1, sv = -1, sw = 1 .. rechtes unteres Dreieck C1
Su = -1, sv = sw = 1 .. linkes seitliches Dreieck D1

Diese 4 Dreiecke decken den gesamten Sechseckbereich in der Spannungsraumzeigerebene ab, die ein Umrichter maximal erzeugen kann.

Durch Tausch der Größen 1 gegen -1 und umgekehrt, kann die Fläche alternativ aus um die senkrechte Achse gespiegelten 4 Dreiecken gewonnen werden (Fig. 4):

Su = sv = sw = -1 .. inneres Dreieck A2
Su = sv = -1, sw = 1 .. linkes unteres Dreieck C2
Su = -1, sv = 1, sw = -1 .. linkes oberes Dreieck B2
Su = 1, sv = sw = -1 .. rechtes seitliches Dreieck D2

Gemäß der Fig. 3 und 4 werden die Bereiche der Spannungsraumzeigerebene, die unter ausschließlicher Verwendung aktiver Schaltzustände erzeugt werden können, aufgezeigt.

Jeder Spannungsraumzeiger innerhalb des Sechsecks kann also durch zwei Aktiv-PWM-Zyklen (z.B. Punkt P1 in Fig. 2 durch Zyklus C1 oder D2, Punkt P2 durch Zyklus A1 oder A2) und durch den dem Stand der Technik entsprechenden Standard-PWM-Zyklus (z.B. Punkt P1 durch Zyklus des Sektors S6 gemäß Fig. 1 oder Punkt P2 durch Zyklus des Sektors S4) dargestellt werden. Die Auswahl aus diesen 3 Realisierungen stellt einen Freiheitsgrad dar, der zur Optimierung eines beliebigen Kriteriums herangezogen werden kann.

Beispielsweise kann der Punkt P2 standardmäßig durch S4 und für den Fall einer sauberen Strommessung durch A1 dargestellt werden, dies optimiert den Oberschwingungsgehalt des Stromes in Kombination mit der guten Messbarkeit über den Zwischenkreis. Wird der Punkt P2 nur durch z.B. A1 dargestellt, optimiert dies die Geräuschentwicklung in Kombination mit der guten Messbarkeit über den Zwischenkreis. Stellt man den Punkt P2 abwechselnd durch A1 und A2 dar, so führt dies zu hohen Symmetrien, die ebenfalls gewisse Systemvorteile bieten.

Der strichlierte Inkreis des Dreieckes A1 bzw. A2 entspricht dem größten darstellbaren "quasibetragskontinuierlichen" Spannungsraumzeiger ohne das Schaltmuster zwingend zu ändern.

Als zwei vorteilhafte Ausführungsbeispiele werden zwei Strategien gezeigt, wie die Spannungsraumzeigerbildung unter Ausnutzung des Freiheitsgrades bezüglich der Realisierung vorgenommen werden kann:

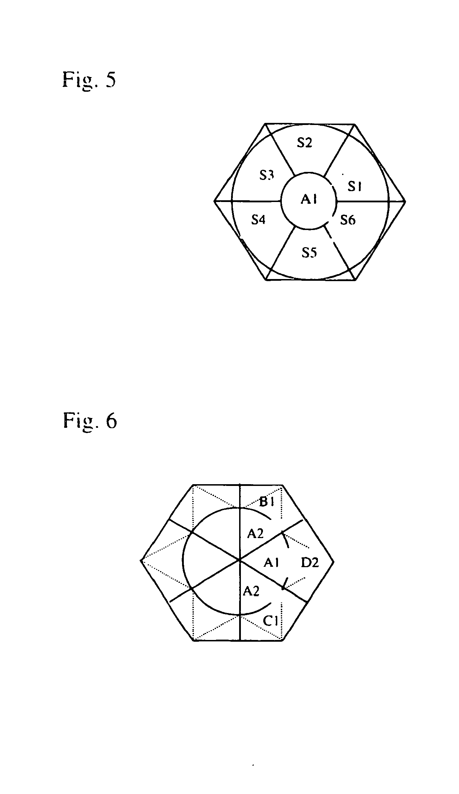

Beispiel 1: Klassisches PWM-Muster mit zentralem Aktiv-PWM-Zyklus gemäß Fig. 5:

Diese Strategie verhindert die Probleme der sehr kurzen Einschaltdauern aktiver PWM-Zustände bei betragsmäßig kleinen Spannungen im Hinblick auf die Rekonstruierbarkeit des Stromes über den Zwischenkreis. Der Radius des Bereichs A1 kann mit Hysterese ausgeführt werden, sodass die Rückkehr aus dem klassischen PWM Bereich in den A1-Bereich bei einem kleineren Radius des Spannungsraumzeigers erfolgt als das Verlassen des A1 Bereichs. Bei Verfahren nach dem Stand der Technik wird die Zone kleiner Spannungsraumzeigerbeträge durch Verlängern der Aktiv-Impulse auf ein Mindestmaß und Korrektur dieser Maßnahme in einem folgenden Zyklus unbefriedigend gelöst.

Beispiel 2: Strategie mit ausschließlichen Aktiv-PWM-Zyklen gemäß Fig. 6:

Diese Strategie sichert ständig gute Rekonstruierbarkeit des Stromes über den Zwischenkreis, da die Probleme an den Sektorgrenzen der klassischen PWM-Muster hier nicht auftreten.

## Patentansprüche

1. Verfahren zur näherungsweisen Einstellung, des Spannungsraumzeigers bei einer über einen Spannungszwischenkreisumrichter gespeisten Drehfeldmaschine, **dadurch gekennzeichnet, dass** zur Einstellung des Spannungsraumzeigers ($\underline{u}$), zumindest fallweise, ein Aktiv-Pulsweitenmodulations-Zyklus mit der Periodendauer (T) als Pulsmuster aus mindestens zwei, vorzugsweise drei, Umrichter-Schalterstellungen an die Drehfeldmaschine (8) angelegt wird, wobei der Aktiv-Pulsweitenmodulations-Zyklus eine Kombination aus positiver oder negativer Zeiger in Richtung u und/oder positiver oder negativer Zeiger in Richtung v und/oder positiver oder negativer Zeiger in Richtung w ist und die entsprechenden Einschaltdauern nach der Formel:

$$\underline{u}.T = su.\underline{u}_u.T_u + sv.\underline{u}_v.T_v + sw.\underline{u}_w.T_w$$

mit den Nebenbedingungen $T = T_u + T_v + T_w$, wobei die Einschaltdauern $T_u$, $T_v$, $T_w$ größer oder gleich Null sind und
su, sv, sw die Werte +1, 0 oder -1 annehmen können,
bestimmt werden.

2. Verfahren nach Anspruch 1, **dadurch gekennzeichnet, dass** zur Bestimmung der aktuellen Maschinenströme die Strommessung im Zwischenkreis (zk) durch mindestens einmaliges Abtasten des Zwischenkreisstromes (Izk) während der auftretenden aktiven Umrichter-Schaltzustände durchgeführt wird

3. Verfahren nach einem der Ansprüche 1 oder 2, **dadurch gekennzeichnet, dass** in Abhängigkeit von mindestens einem der Zustände "Drehzahl", "Drehwinkel" und "vorhergehender PWM-Zyklus" der Drehstrommaschine (8) die an der Pulsmusterbildung beteiligten Spannungsraumzeiger bzw. Umrichter-Schalterstellungen geändert werden.

4. Verfahren nach mindestens einem der Ansprüche 1 bis 3, **dadurch gekennzeichnet, dass** in Abhängigkeit von mindestens einem der Zustände "Drehzahl", "Drehwinkel" und "vorhergehender PWM-Zyklus" der Drehstrommaschine (8) das Pulsmuster durch ein Pulsmuster, das auch den Umrichterzustand "Kurzschluss" enthält, abgelöst wird.

5. Verfahren nach mindestens einem der Ansprüche 1 bis 4, **dadurch gekennzeichnet, dass** der Stromanstieg des in den Zwischenkreis (zk) abgebildeten Strangstroms durch mindestens zweimaliges Abtasten des Stromes während einer anliegenden Umrichter-Schalterstellung erfasst wird.

6. Verfahren nach mindestens einem der Ansprüche 1 bis 5, **dadurch gekennzeichnet, dass** höhere Ableitungen des in den Zwischenkreis (zk) abgebildeten Strangstroms durch mindestens dreimaliges Abtasten des Stromes während einer anliegenden Umrichter-Schalterstellung erfasst werden.

7. Verfahren nach mindestens einem der Ansprüche 1 bis 6, **dadurch gekennzeichnet, dass** durch mehrmaliges Abtasten des Stroms mindestens eine der physikalischen Größen "Drehwinkel", "Flusswinkel", "Drehzahl°, "Zwischenkreisspannung", "Stranginduktivität", "induzierte Spannung" bestimmt werden.

8. Schaltungsanordnung zur näherungsweisen Einstellung des Spannungsraumzeigers bei einer über einen Spannungszwischenkreisumrichter gespeisten Drehfeldmaschine (8), wobei im Zwischenkreis (zk) ein Messglied (R) zur Erfassung des Zwischenkreisstromes (Izk) angeordnet ist und das Messglied (R) mit einer in einer Mess- und Steuereinheit (7) vorgesehenen Motorstrom-Rekonstruktionsschaltung (10) verbunden ist, und wobei in der Mess- und Steuereinheit (7) weiters eine Regelungsschaltung (11), die die Umrichter-Schalterstellung (5) vorgibt, vorgesehen ist, die einerseits mit der Motorstrom-Rekonstruktionsschaltung (10) und anderseits mit dem Wechselrichter (4) verbunden ist, und wobei die Sollwertvorgabe (S) für einen Maschinenzustand über einen Eingang der Regelungsschaltung (11) erfolgt, wobei die Schaltungsanordnung **dadurch gekennzeichnet ist, dass** zur Einstellung des
Spannungsraumzeigers ($\underline{u}$), zumindest fallweise, ein Aktiv-Pulsweitenmodulations-Zyklus mit der Periodendauer (T) als Pulsmuster aus mindestens zwei, vorzugsweise drei, Umrichter-Schalterstellungen an die Drehfeldmaschine (8) angelegt wird, wobei der Aktiv-Pulsweitenmodulations-Zyklus eine Kombination aus positiver oder negativer Zeiger in Richtung u und/oder positiver oder negativer Zeiger in Richtung v und/oder positiver oder negativer Zeiger in Richtung w ist und die entsprechenden Einschaltdauern nach der Formel:

$$\underline{u}.T = su.\underline{u}_u.T_u + sv.\underline{u}_v.T_v + sw.\underline{u}_w.T_w$$

mit den Nebenbedingungen $T = T_u + T_v + T_w$, wobei die Einschaltdauern $T_u$, $T_v$, $T_w$ größer oder gleich Null sind und
su, sv, sw die Werte +1, 0 oder -1 annehmen können,
bestimmt werden.

**Claims**

1. Method for approximate adjustment of the current vector on an indirect inverter-supplied induction machine, **characterised by** the fact that, at least occasionally, an active pulse-width modulation cycle with the period (T) as pulse pattern out of at least two, preferably three inverter switching positions is applied to the induction machine (8) for adjustment of the current vector ($\underline{u}$), whereby the active pulse-width modulation cycle consists of a combination of positive or negative vectors in the direction u and/or positive or negative vectors in the direction v and/or positive or negative vectors in the direction w, and the relevant duty cycles are determined in accordance with the formula:

$$\underline{u}.T = su.\underline{u}_u .T_u + sv.\underline{u}_v .T_v + sw.\underline{u}_w .T_w$$

   with the secondary conditions
   $T = T_u + T_v + T_w$, whereby the duty cycles $T_u$, $T_v$, $T_w$ are greater or equal zero, and
   su, sv, sw may take on the values +1, 0 or -1.

2. Method in accordance with Claim 1, **characterised by** the fact that for determination of the active machine currents, the current in the intermediate circuit (zk) is measured by at least once-off sensing of the intermediate circuit current (Izk) whilst the active inverter switching states occur

3. Method in accordance with one of the Claims 1 or 2, **characterised by** the fact that depending on at least one of the states "rotational speed", "angle of rotation" and "previous PWM cycle" of the three-phase machine (8), the current vectors resp. inverter switching positions involved in the creation of the pulse pattern are changed.

4. Method in accordance with at least one of the Claims 1 to 3, **characterised by** the fact that depending on at least one of the states "rotational speed", "angle of rotation" and "previous PWM cycle" of the three-phase machine (8), the pulse pattern is replaced by a pulse pattern that also contains the inverter state "short circuit".

5. Method in accordance with at least one of the Claims 1 to 4, **characterised by** the fact that the current increase of the phase current represented in the intermediate circuit (zk) is picked up by at least two-fold sensing of the current whilst an inverter switching position is in place.

6. Method in accordance with at least one of the Claims 1 to 5, **characterised by** the fact that higher discharges of the phase current represented in the intermediate circuit (zk) are picked up by at least three-fold sensing of the current whilst an inverter switching position is in place.

7. Method in accordance with at least one of the Claims 1 to 6, **characterised by** the fact that at least one of the physical quantities "angle of rotation", "angle of flow", "rotational speed", "intermediate circuit current", "branch inductance", "induced voltage" are determined by multiple sensing of the current.

8. Circuit configuration for approximate adjustment of the current vector on an indirect inverter-supplied induction machine (8), whereby a measuring component (R) is arranged in the intermediate circuit (zk) for measurement of the intermediate circuit current (Izk) and the measuring component (R) is connected with a motor current reconstruction circuit (10) provided in a measuring and control unit (7), and whereby in addition a control circuit (11) is provided in the measuring and control unit (7) that defines the inverter switching position (5) and which, on the one hand, is connected with the motor current reconstructions circuit (10) and, on the other hand, with the inverter (4), and whereby the must value setting (S) for a machine status is performed through an entry of the control circuit (11), whereby the circuit configuration is **characterised by** the fact that, at least occasionally, an active pulse-width modulation cycle with the period (T) as pulse pattern out of at least two, preferably three inverter switching positions is applied to the induction machine (8) for regulation of the current vector ($\underline{u}$), whereby the active pulse-width modulation cycle consists of a combination of positive or negative vectors in the direction u and/or positive or negative vectors in the direction v and/or positive or negative vectors in the direction w, and the relevant duty cycles are determined in accordance with the formula:

$$\underline{u}.T = su.\underline{u}_u .T_u + sv.\underline{u}_v .T_v + sw.\underline{u}_w .T_w$$

with the secondary conditions
$T = T_u + T_v + T_w$, whereby the duty cycles $T_u$, $T_v$, $T_w$ are greater or equal zero, and
su, sv, sw may take on the values +1, 0 or -1.

**Revendications**

1. Procédé permettant le réglage approximatif du vecteur de voltage d'un générateur à induction alimenté par un redresseur indirect, **caractérisé par le fait que**, de temps en temps au moins, un cycle actif de modulation des pulsions en largeur d'une durée de période (T) - provenant de deux ou de préférence trois positions du commutateur du redresseur et servant de modèle de pulsion - est appliquée à ce générateur à induction (8), afin de régler le vecteur de voltage ($\underline{u}$) :

   le cycle actif de modulation des pulsions en largeur étant une combinaison de vecteurs positifs ou négatifs d'orientation et/ou de vecteurs positifs ou négatifs d'orientation v, et/ou de vecteurs positifs ou négatifs d'orientation w, les durées de mise en marche étant calculée selon la formule:

$$\underline{u}.T = su.\underline{u}_u .T_u + sv.\underline{u}_v .T_v + sw.\underline{u}_w .T_w$$

   aux conditions secondaires
   $T = T_u + T_v + T_w$, les durées de mise en marche $T_u$, $T_v$, $T_w$ étant supérieures ou égales à zéro et
   su, sv, sw adoptant les valeurs +1, 0 ou -1,

2. Procédé selon la revendication 1, **caractérisé par le fait que** pour déterminer les courants actuels de la machine, le mesurage du courant dans le circuit intermédiaire (zk) est effectué en captant au moins une fois le courant du circuit intermédiaire (Izk) lorsque les états de commutation des convertisseurs sont actifs.

3. Procédé selon les revendications 1 ou 2, **caractérisé par le fait qu'**en fonction d'au moins un des états "RPM", "angle de rotation" et "cycle antérieur de modulation d'impulsions en largeur" de la machine triphasée (8), les vecteurs de tension ou les positions des convertisseurs impliqués dans le dessin des pulsions sont modifiés.

4. Procédé selon au moins une des revendications 1 à 3, **caractérisé par le fait qu'**en fonction d'au moins un des états "RPM", "angle de rotation" et "cycle antérieur de modulation d'impulsions en largeur" de la machine triphasée (8), le dessin de pulsations est remplacé par un dessin de pulsations contenant également l'état du convertisseur « court circuit ».

5. Procédé selon au moins une des revendications 1 à 4, **caractérisé par le fait que** la montée du courant du conducteur représentée dans le circuit intermédiaire (zk) est saisie par au moins deux captages du courant pendant un état de commutation du convertisseur.

6. Procédé selon au moins une des revendications 1 à 5, **caractérisé par le fait que** des dérivations élevés du courant des conducteurs représentées dans le circuit intermédiaire (zk) sont saisies par au moins trois captages du courant pendant une position du convertisseur.

7. Procédé selon au moins une des revendications 1 à 6, **caractérisé par le fait que** grâce à des captages répétés du courant, au moins l'une des grandeurs physiques, « angle de rotation », « angle de flux », « RPM », « voltage du circuit intermédiaire », « inductance du conducteur », « voltage induit » est déterminée.

8. Configuration des circuits permettant le réglage approximatif du vecteur de voltage pour une machine triphasée (8) alimentée par un convertisseur, le circuit intermédiaire (zk) contenant un relais (R) captant le courant du circuit intermédiaire, lequel relais (R) étant connecté à un circuit de reconstitution du courant du moteur (10), l'unité de mesure et de commande (7) étant équipée d'un circuit de réglage (11) déterminant la position du convertisseur (5), lequel circuit est connecté au circuit de reconstitution (10) d'une part, et au commutateur (4) d'autre part, la consigne (s) s'appliquant à un état de machine au-dessus via une entrée du circuit de réglage (11), la configuration des circuits étant **caractérisée par le fait que** pour régler le vecteur ($\underline{u}$), un cycle actif de modulation des largeurs de pulsions à une durée de période (T) est appliqué au moins par intermittence à la machine triphasée (8) comme modèle de pulsions comprenant un minimum de deux et de préférence trois positions du commutateur ; le cycle de modulation des largeurs des pulsations étant une combinaison de vecteurs positifs ou négatifs en direction de u d'une part, et/ou de vecteurs positifs ou négatifs en direction de v et/ou de vecteurs positifs ou négatifs en direction de w, et les durées de mise en circuit étant calculées selon la formule

$$\underline{u}.T = su.\underline{u}_u\,.T_u + sv.\underline{u}_v\,.T_v + sw.\underline{u}_w\,.T_w$$

aux conditions secondaires
$T = T_u + T_v + T_w$ ,les durées de mise en circuit $T_u$, $T_v$, $T_w$ étant supérieures ou égales à zéro
et su, sv, sw pouvant adopter les valeurs de +1, 0 ou de -1.

Fig.1

10

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5309349 A
- US 08903110 B
- US 20040195995 A1
- DE 4034520 A1
- AT 406722